## Europäisches Patentamt
## European Patent Office
## Office européen des brevets

(11) Publication number: **0 057 573**
**A1**

(12)

# EUROPEAN PATENT APPLICATION

(21) Application number: **82300445.2**

(22) Date of filing: **28.01.82**

(51) Int. Cl.³: **G 05 D 23/19**

(30) Priority: **30.01.81 US 229690**

(43) Date of publication of application: **11.08.82**
**Bulletin 82/32**

(84) Designated Contracting States: **DE FR SE**

(71) Applicant: **HONEYWELL INC., Honeywell Plaza,
Minneapolis Minnesota 55408 (US)**

(72) Inventor: **Jaeger, Thomas S., 5210-54th Avenue North,
Minneapolis Minnesota 55429 (US)**

(74) Representative: **Harman, Michael Godfrey et al,
Honeywell Control Systems Ltd. Patent Department
Charles Square, Bracknell Berks RG12 1EB (GB)**

(54) **Multistage thermostat.**

(57) A multistage thermostat includes multistage cycler means 36 comprising a primary cycler 102 which controls a primary heating stage (heat pump) and a plurality of cyclers (103–104) which control respective stages of the secondary heat (electric heat). The setpoint means Tsp is driven by a clock 11 and night setback and day setup means 12. The setpoint means and a temperature sensor Ts are differenced to form a signal for controlling the multistage cycler. The error signal is fed through a proportional constant means 81 and an integrator means 71 in parallel to control the multistage cycler means. To prevent the primary heating stage going off at setback when the temperature is low, and prevent secondary heating stages coming on on setup when the primary heating means can handle the load, a comparator unit (25) detects any sudden change in the setpoint and re-initiates or resets the integrator to a new stored value.

- 1 -

## MULTISTAGE THERMOSTAT

The present invention relates to thermostats, and in particular to multistage thermostats for controlling a primary heating means and secondary heating means.

Multistage heating plants have been in use for many years, and typically are made up of heating equipment that provides heat from two different sources. Examples include heat pumps with auxiliary electric heat, heat pumps with auxiliary gas furnaces, and solar energy sources with auxiliary heat of either electric or fossil fuels. The reason for using heating plants that have primary and secondary fuel sources is to take advantage of a lower cost heating fuel with the use of the primary source and then utilizing the low capital cost secondary source, which requires a more costly fuel, for load peaks.

In recent years, to increase the cost efficiency of the use of multistage equipment, it has been common to install outside temperature sensing equipment to aid in the staging of the primary and secondary heating plants. As is well known, it is more efficient to provide heat by operating a heat pump than by the use of a secondary heating source such as electric heat. As this is the case, it is desirable to prevent the electric heat from becoming operable if the primary source, the heat pump, can handle the heating load by itself. Where a multistage system is operated at a constant indoor temperature, this creates no significant problem. If the indoor temperature is held constant, the natural variations in outdoor temperature cause the heat pump and its auxiliary heat to be staged in its most efficient manner. That is, the heat pump will supply heat until it is no longer able to maintain a stable temperature and then the auxiliary or electric heat will be brought into operation.

In order to save energy, it has become commonplace to provide a night setback function on many thermostats, along with the associated day setup function. These functions provide for a lower nighttime temperature within the heated

- 2 -

building, and a morning pickup or return to the normal daytime ambient temperature. Where night setback and morning pickup are provided, a heat pump may not be operated in its most efficient mode. For example, in the morning when the thermostat is returned to normal daytime ambient temperature control, the heat pump is turned on along with a number of stages of electric heat. This morning pickup therefore utilizes both the primary and secondary heating sources at the same time even though the heat pump alone might be capable of bringing the temperature of the building up to the setpoint temperature if given sufficient time. In order to prevent this type of a system from having the electric heat staged on at the time of morning pickup, many installations contain outside thermostats which lock the electric heat off if the outdoor ambient is above some predetermined temperature. This type of system is expensive and inefficient. It is expensive in that it requires an outside temperature sensing device and auxiliary control equipment. It is inefficient as many installers misadjust the equipment so that electric heat is brought on even though it would not be required to bring the building up to the normal daytime ambient.

This type of system alos has a further fault. Many heat pumps must be operated continuously in extremely cold climates to prevent damage to the equipment. If a thermostat in a building is set down at night, say $7^{o}$C, typically the heat pump and all of its auxiliary heat would be turned off. This is an undesirable condition as the heat pump can be damaged. It is more desirable that on night setback that the pump be kept in operation if the outdoor ambient is quite low. This allows the heat pump to be protected by continuous operation, and a small amount of heat from the heat pump is supplied as the ambient temperature within the building drifts down to the night setback temperature. Once again, if this type of protection is to be provided, an outdoor sensor and control equipment must be installed to prevent a night setback from turning off the heat pump even though the indoor thermostat is setback to a point which would not otherwise require the heat pump to be active.

In summary, it is common in the control of heat pumps with auxiliary heat, particularly electric heat, to install outside sensing equipment that overrides any setpoint changes either in setup in the morning or setback at night. The installation of this extra equipment, and the deficiencies in its adjustment, make the operation of heat pump equipment and auxiliary heat marginal in many types of installations. In some localities, the electric utilities supplying power have suggested that heat pump installations be operated without night setback and morning pickup just because of the conditions discussed above.

The object of the present invention is to provide a thermostat which alleviates or overcomes these problems.

Accordingly the invention provides a multistage thermostat for controlling a heating plant having a primary heating means and secondary heating means, comprising temperature sensing means and ajustable setpoint means whose outputs are combined to form an error signal which is used to control multistage cycler means which progressively stage the primary and secondary heating means, characterized by integrator means and proportional constant means through which the error signal is passed in parallel to form a composite error signal which controls the multistage cycler means, and a comparator unit responsive to a change in the set-point exceeding a predetermined magnitude to re-initiate the stored value of the integrator means.

The present system, in its preferred form, provides for night setback and morning setup or pickup in a manner which will most efficiently utilize the operation of a heat pump without necessarily causing the auxiliary heat to become energized, and without any type of outside sensing or field adjustment of outside located equipment.

The system provides a multistage thermostat that has an internal clock that provides timed control for night setback and morning setup. It has an integrating type of control, with the integrator used in the control being capable of having a stored integral value adjusted at night setback or morning setup to insure that the heat pump will be operated in a proper manner. It includes means for storing a previous temperature setpoint so that the previous temperature setpoint can be compared periodically, typically at 30 second intervals, with the present setpoint temperature. When a night setback adjustment or a morning setup adjustment occurs, the comparison of the previous temperature setpoint in the holding mechanism with the new setpoint shows that the system has undergone a setpoint change. The amount of the setpoint change is fed into a comparator unit that has a plurality of stored constants against which the change is compared. If the change is of a particular magnitude and direction, the stored integral value of the integrator in the system is reset or reinitiated at a different level, thereby adjusting the system operation so that proper staging can occur. Proper staging is bringing on auxiliary heat only when the operation of the heat pump alone will not satisfy the temperature control requirements within a set period of time, and insuring that the heat pump is not turned off if the outdoor ambient is below a predetermined level. These predetermined levels are sensed by comparing the previous setpoint temperature with the new setpoint temperature after a setpoint change has been made. It is quite obvious that, if a larger difference exists between a previous setpoint temperature and a new setpoint temperature, a change in control is required. This change reflects the fact that a setpoint change has occurred, and can be correlated with the outdoor temperature. A change made manually is treated the same as a clock made change.

The present integrating type of control, which is reset dependent on a comparison with a previous setpoint temperature versus the present setpoint temperature, is then fed as a continuous error signal into a multistage cycler. The multistage cycler is a device which progressively brings on stages of heating. Each stage has a hysteresis control function and by continuously increasing the composite error signal, stages of heating, from the primary through the secondary stages, can be progressively brought on in the most efficient manner.

A multistage thermostat in accordance with the invention will now be described, by way of example, with reference to the drawings, in which:-

Figure 1 is a block diagram of the thermostat;

Figure 1A is a block diagram of the comparison unit of the thermostat;

Figure 2 is a graph of the operation of the multistage cycler of the thermostat; and

Figures 3 and 4 are graphs of the operation of the thermostat over a 24-hr cycle for two different outside temperatures.

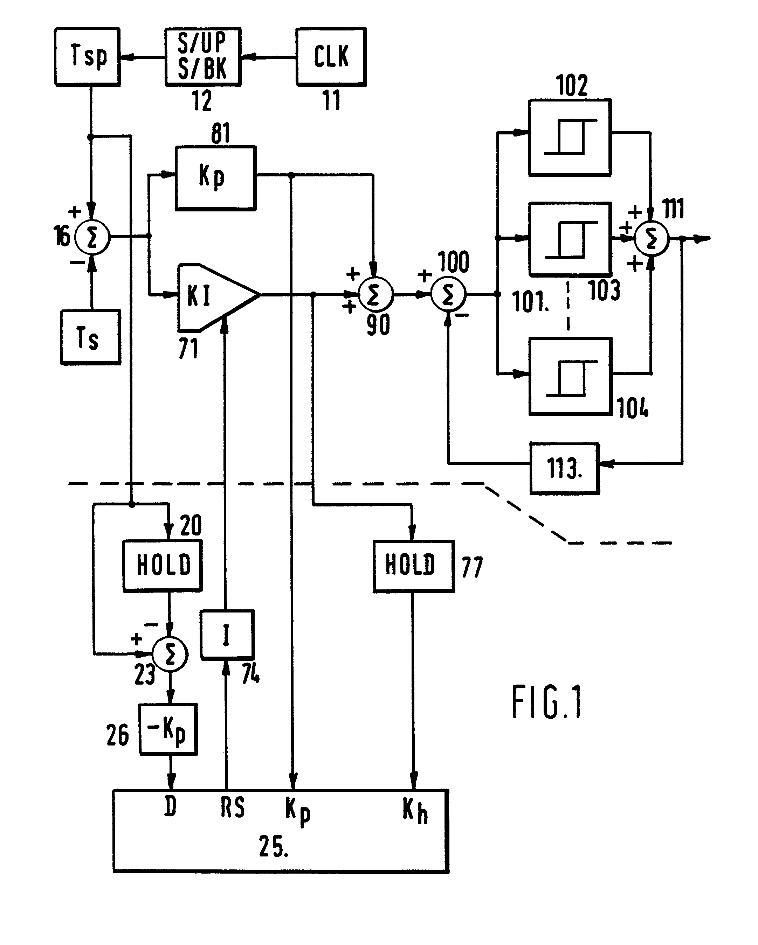

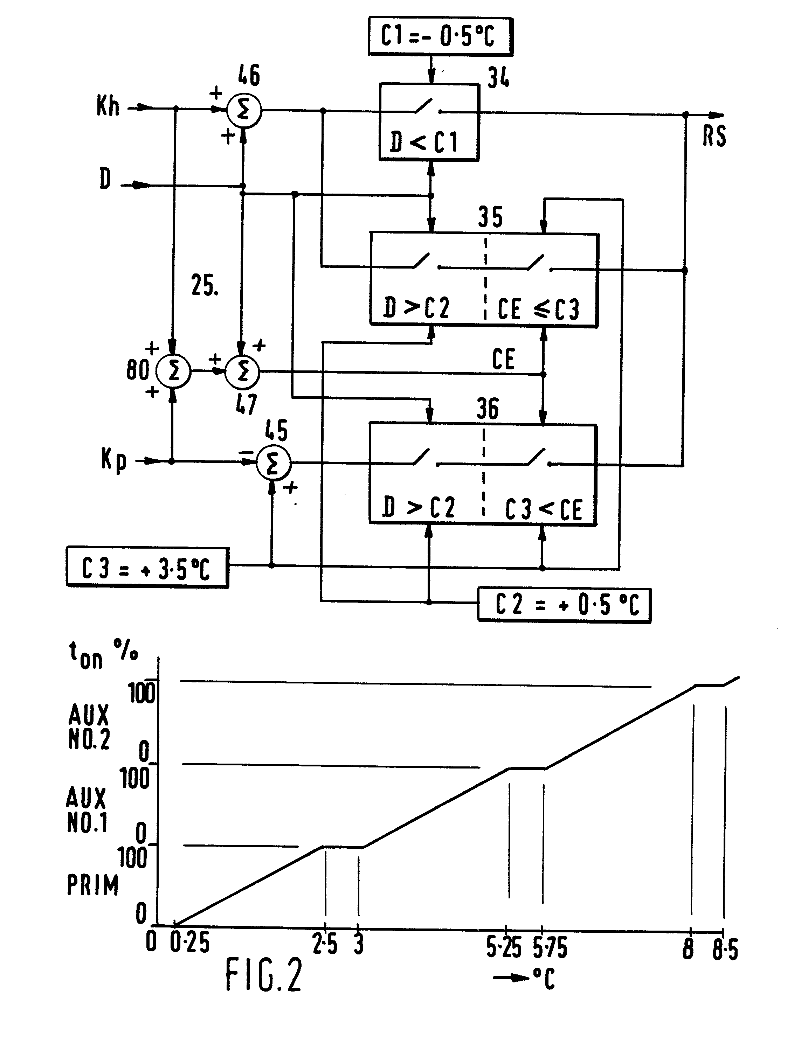

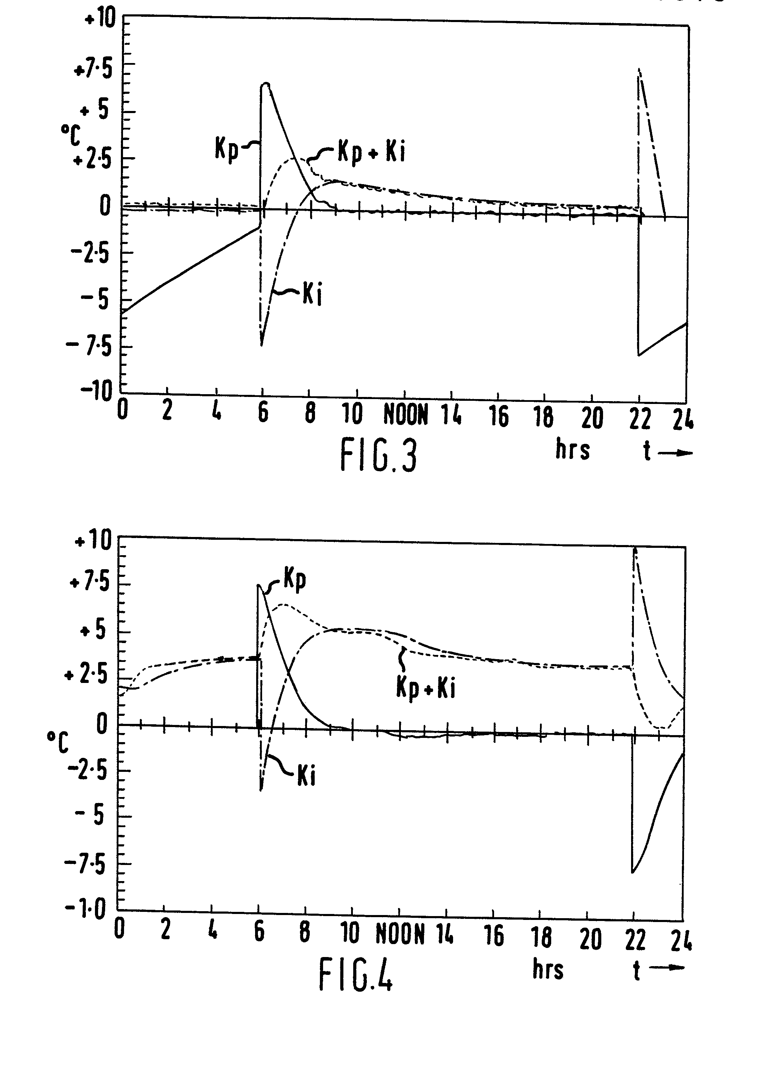

The thermostat consists of a portion of broadly conventional character, together with a portion which gives it the special characteristics which result in proper operation of the primary heating means relative to the secondary heating means. The broadly conventional portion is shown in Figure 1, and will be described first.

A clock 11 provides conventional functions, including driving a set-up and set-back means 12 which can be programmed in any conventional manner. A temperature sensor Ts senses the temperature of the space to be controlled, and a set-point device Tsp is settable to the temperature desired. The set-point device Tsp receives an input from the set-up and set-back means 12, so that the set-point temperature is automatically set back (down) by a suitable amount at, say, 22.00 hrs and set up to the nominal value at, say, 06.00 hrs.

The sensor Ts and the set-point means Tsp feed a summer 16 which forms a signal representing the difference between the actual and set-point temperatures. This signal is the temperature error signal. This signal is fed to two signal processing paths in parallel; a proportional constant unit 81 and an integrating means 71. The proportional constant unit is an amplifier of fixed gain, which may conveniently be a gain of +1. The integrating means integrates the temperature error signal. These two signal processing paths have their outputs summed at a summer 90.

The resulting signal from summer 90 is fed to multistage cycling means which consists of a plurality of independent cycling stages 102, 103, ...104, one for each heating stage (one primary stage and one or more secondary stages). Each cycling stage has a hysteresis characteristic, and the stages are arranged with their characteristics separated by small temperature intervals. Figure 2 is a graph showing the way in which the various stages of heat are brought into operation as the temperature error signal varies. For an error or less than $0.25^{\circ}$C, no heating stage is on. For an error in the range 0.25 to $2.5^{\circ}$C, the primary heating stage is on, cycling so that its percentage on time varies between 0 and 100% through that range. As the error increases, so successive secondary heating stages are brought into operation, each having a proportional range in which it cycles with an on time between 0 and 100% and the band for each stage being separated from the band for the previous stage by a small temperature separation of $0.25^{\circ}$C.

The cycling stages 102, 103, ... 104 may have their outputs combined as shown by a summer 111 to produce a control signal for the various heating stages, or may control their respective heating stages directly. A conventional anticipation circuit 113 provides feedback around the multistage cycling means, from the output of summer 111 to a summer 100 which is fed by summer 90 and feeds the multistage cycling means.

The portion of the circuit which gives it its special characteristics will now be described.

First, the integrator 71 is resettable by means of a signal source 74; this signal source initiates the point of integration of the integrator 71, which can be shifted by the input of source 74. That is, the integrator 71 can be initiated with a stored integral value and can be reinitiated from its current stored integral value to a new integral value supplied from source 74.

Next, the temperature set-point means Tsp and the integrator 71 feed respective hold circuits 20 and 77. These hold circuits are controlled by the clock 11, and operate to store the input signal value at a sample time (defined by a pulse from clock 11) so that the stored value is available in addition to the current value at a later time. Sampling may conveniently be carried out every 30 s. The set-point hold circuit 20 feeds a summer 23 which is also fed from the temperature set-point means Tsp, so that the output of the summer 23 is a signal representing the size of any change of the set-point. This signal is inverted by an inverting amplifier 26 to produce a difference signal D.

Finally, the signal D, the signal Kp from the proportional constant means 81, and the signal Kh from the integrating means hold circuit 77 are fed to a comparator unit 25, which produces from these signals a reset signal RS which is fed to the reset signal source 74 which reinitiates the integrator 71.

Figure 1A shows the comparator unit 25 in detail. This includes three comparator-controlled switches 34, 35, and 36, the latter two being double switches. Switch 34 is controlled by the input signal C1 and D, and closes when the condition D < C1 is met, as indicated in the switch. The relevant conditions for the remaining switches are as indicated. It will be noted that each switch is closed when the upper input is greater then the lower input, and open when the opposite is the case. The control signals consist of three constants C1, C2, and C3, which represent the temperatures indicated, the difference signal D, and an error signal CE which is produced by a first summer 80, which adds the signals Kp and Kh (from the proportional constant unit 81 and the integrator hold circuit 77 respectively), and a second summer 47 which adds the output of summer 80 and the difference signal D. The constants C1 and C2 are each equal in magnitude to the width of the horizontal portions of the graph of Figure 2 between adjacent heating stages, and the constant C3 is at least equal to the distance, in Figure 2, between corresponding points for adjacent heating stages.

The three comparator-controlled switches 34 to 36 are arranged so that at most one has its switch (or both its switches) closed, and have their outputs connected together to form the signal RS which controls the reset signal source 74. The input to switch 34 is the sum, produced by a summer 46, of signals D and Kh, and the same signal is fed to switch 35. Switch 36 is fed with the sum, produced by summer 45, of the constant C3 and signal Kp.

The effect of this is, in general terms, that the circuit of Figure 1 (disregarding the portion giving it its special characteristics) will operate normally under most circumstances. However, in certain circumstances the comparator unit 25 will operate, and will effect a resetting of the integrator 71. More specifically, the comparator unit 25 will operate in any of the following three circumstances:

a) a set-point set-up change (D) exceeding C1 (-0.5$^{\circ}$C) negatively;

b) a set-point set-back change (D) exceeding C2 (+0.5$^{\circ}$C) positively and an error signal (CE) not greater than C3 (+3.5$^{\circ}$C); and

c) a set-point set-back change (D) exceeding C2 positively and an error signal (CE) greater than C3.

The effect of any of these circumstances is to produce a resetting of the integrator, by an amount dependent on which circumstances occurs, as follows:

a and b) the integrator is reset to a value RS = Kh + D, where Kh is the integrator output just previous to the resetting;

c) the integrator is reset to a value RS = C3 - Kp, where Kp is the current temperature error signal.

The operation of the thermostat will be described further with reference to Figures 3 and 4. Figure 3 shows three graphs, of the temperature error signal Kp (appearing from summer 15 and proportional constant means 81), the integrator 71 output signal Ki, and the composite error signal Kp + Ki produced by summer 90, all for a mild outdoor temperature. The time scale is for a 1-day cycle. Figure 4 shows the corresponding graphs for a low outdoor temperature. Both graphs show a $7.5^O$ temperature set-up at 06.00 hrs in the morning and a corresponding set-back at 22.00 hrs at night. The vertical scale is temperature, measured in degrees below the set-point (positive values) or above set-point (negative values).

The graphs in Figure 3 start at midnight (00.00 hrs). It will be noted that the current error signal Kp is slowly drifting up towards the $0^O C$ (the setpoint temperature). Since the system has been working in a night setback environment with a mild outdoor temperature, the ambient is slowly drifting with the setpoint Tsp somewhere above the point at which control is desired. During this same period of time, the integral reset signal Ki and the composite error signal are substantially at 0.

At 06.00 hrs in the morning a setup of $7.5^O C$ occurs, as is shown by the current error Kp suddenly changing to indicate that a signal below the setpoint is being sensed by sensor Ts. Now it will be seen from Figure 1 that when this sudden change in the setpoint Tsp occurs, the summer produces a $7.5^O C$ error signal. This is accomplished by the hold circuit 20 providing a signal that is representative of the set-point temperature just prior to the change, while the signal from the setpoint means Tsp has been shifted by $7.5^O C$.

The output of the summer 23 is inverted at 26 to give a $-7.5^O C$ difference signal D in setpoint. This signal is then immediately compared by the comparators 34, 35, and 36 of comparator unit 25.   Since D = -7.5$^o$C is less than C2 =
+0.5$^o$C, the switches of the comparators 35 and 36 both remain open, and neither of these two comparators provides
any output affecting the reset signal RS.  But the signal D
= 7.5$^o$C is less than C1 = 0.5$^o$C, and the switch of comparator 34 therefore closes, applying a 7.5$^o$C shift as signal
RS ot the integral reset 74, which resets the condition of
the integrator 71.  In Figure 3 this is represented by the
sudden drop of the integral reset output Ki.  This drop is
7.5$^o$C and corresponds with the 7.5$^o$C setup.

At the time that the shift takes place for the setup,
the hold circuit 77 retains the previous integral which is
approximately 0$^o$C.  The reason that it is 0$^o$C is that the
system had no change from the previous interval of time and
therefore the integrator                    is near 0$^o$C.
This is the reason that the summed value at the summing means
46 is approximately -7.5$^o$C, which is what the comparator 34
supplies to the integrator 71 to shift the integration by
7.5$^o$C.

It will be noted that the sudden shift of the integral
reset Ki at the same time that the setup temperature of 7.5$^o$C
occurs, causes the composite error signal to remain quite
low.  As a matter of fact, in a properly designed system the
composite error signal will not exceed 2.25$^o$C, thereby turn-
ing only the heat pump on.  It will be noted from Figure 2
that if the composite error signal does not exceed 2.5$^o$C,
the heat pump alone will be operative and no electric heat
will be brought into operation.  The reset of the integrator
prevents the unnecessary operation of the electric heat,
which is the desired function provided by the thermostat 10.
Since the outdoor ambient is relatively mild, the heat pump
alone is capable of bringing the system back to a control
point, as is shown by the current error signal Kp returning
to the 0$^o$C at approximately 09.00 hrs in the morning.  The
operation of the system during the rest of the day allows
for the integral reset output Ki and the composite error signal to remain very close to one another, and thereby causes the composite error signal to operate only the heat pump until 10.00 at night.

At 10.00 at night a $7.5^\circ C$ setback is set into the system as is exemplified by a change at that time in curve Kp. Once again the comparator means makes a comparison of the change and compares it with the status at the previous interval of time. This allows for the integrator 71 output Kp to be shifted. Under these conditions the integrator output Kp is at approximately $0.5^\circ C$ immediately after the night setback, while the difference signal D becomes $+7.5^\circ C$. In the comparator 35 this signal D is compared to the constant $C2 = +0.5^\circ C$, and since D is greater than C2, the first stage switch of the comparator 35 closes. At this same time, the hold circuit 77 is providing the summer 80 with $+0.5^\circ C$ while the current error Kp is $-7.5^\circ C$. The summing at 80 provides $-7.0^\circ C$, which is summed with signal $D = +7.5^\circ C$ at the summer 47, which produces the error signal CE at $+0.5^\circ C$. That signal CE is supplied to the second portion of the comparator 35, where it is compared with the constant $C3 = +3.5^\circ C$, and since CE is less than or equal to C3, the second switch will close. This thereby applies the signal from summer 46 to the signal RS to reset the integrator 71, as shown at the 10.00 in the evening by curve Ki. This sudden shift allows for all of the heating plant to be shut down, that is both the heat pump and the auxiliary heat. Since the outdoor temperature is assumed to be quite mild this is a satisfactory form of operation.

Figure 4 shows a similar set of curves, but with the outdoor temperature sufficiently cold to require the heat pump and some electric heat to be operative even during the night setback operation. It will be noted that at about 6.00 in the morning when the setup occurs, the integrator output Ki again is inverted and that the composite error signal has the same shape as in Figure 3. It will be noted, however, that it is shifted in an upward direction so that the composite error signal is in the range 5 to 7.5$^{o}$C, thereby requiring not only that the heat pump be operated but that some stages of electric heat be added in order to bring the current error output Kp back to approximately 0$^{o}$C at near 9.00 in the morning. Although the current error does not reach 0$^{o}$C until about 9.00, the house reaches the setpoint as about 8.00. This is due to unavoidable sensor lag which is compensated for by the anticipation means.

If Figure 4 is further considered at the setback time of 10.00 at night, it will be noted that the current error is offset once again from the curve Ki, which is the integral reset output. Since the curve Ki has been offset with respect to the zero reference, it will be noted that the composite error curve at 10.00 in the evening is above the 2.5$^{o}$C point, thereby indicating that the heat pump must be kept on as well as possibly some electric heat. The composite error curve never drops to a point that would allow the heat pump to be turned off, so that the heat pump is caused to run continuously even though the initial night setback at 10.00 would have otherwise turned off both the heat pump and all of the auxiliary heat. This is a desirable state of operation for a heat pump in very cold weather, since it is detrimental to the equipment to allow the heat pump to be turned off and then restarted under very cold conditions.

The contents of our copending application "Multistage Thermostat", No.        , filed simultaneously herewith, are hereby incorporated in this specification. This copending application describes a closely related invention.

0057573

CLAIMS

1. A multistage thermostat for controlling a heating plant having a primary heating means and secondary heating means, comprising temperature sensing means (Ts) and adjustable setpoint means (Tsp) whose outputs are combined (at 16) to form an error signal which is used to control multistage cycler means (101) which progressively stage the primary and secondary heating means, characterized by integrator means (71) and proportional constant means (81) through which the error signal is passed in parallel to form a composite error signal which controls the multistage cycler means, and a comparator unit (25) responsive to a change in the setpoint exceeding a predetermined magnitude to re-initiate the stored value of the integrator means.

2. A thermostat according to Claim 1 characterized by means (77) for storing the integrator output, the comparator unit (25) operating to change the stored value of the integrator by this amount in response to a relevant change in the setpoint.

3. A thermostat according to Claim 2 characterized in that the comparator unit changes the stored value of the integrator by a predetermined constant minus the output of the proportional constant means if the sum of the stored integrator output, the change in the setpoint, and the output of the proportional constant means exceed the predetermined constant, the predetermined constant being at least equal to the temperature differential between corresponding states of successive heating stages.

4. The multistage thermostat according to any previous claim, characterized by a clock (11) and time set means (12) which adjust the temperature setpoint means (Tsp) at presettable times.

5. A multistage thermostat according to any previous claim, characterized in that the multistage cycler means com-

- 14 -

prises a respective cycler stage (102, 103, ... 104)
for each stage of heating means, the cycler stages each
having a hysteresis and the cycler stages of the secondary heating means, if the secondary heating means
comprise a plurality of stages, being separated by
temperature differentials.

6.   A multistage thermostat according to any previous claim
characterized by anticipation means (113) which give
negative feedback around the multistage cycler means
(101).

FIG.1

FIG.2

0057573

FIG.3

FIG.4

European Patent
Office

**EUROPEAN SEARCH REPORT**

0057573

Application number

EP 82 30 0445

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | DE - A - 2 510 992 (HYDROTHERM GERATEBAU)<br><br>* page 6, line 4 - page 13, line 4; figures 1,2,3 *<br><br>--- | 1,5,6 | G 05 D 23/19 |
| A | EP - A - 0 007 497 (CARRIER CO.)<br><br>* page 7, line 1 - page 9, line 7; figures 1,2 *<br><br>--- | 1 | |
| A | FR - A - 2 451 548 (TOTALGAZ)<br><br>* page 2, line 26 - page 3, line 18; figure 1 *<br><br>--- | 1 | **TECHNICAL FIELDS SEARCHED (Int.Cl. 3)**<br><br>G 05 D<br>G 05 B<br>F 24 D |
| A | GB - A - 879 381 (AKTIEBOLAGET TERMOSTATIK)<br><br>* page 2, lines 38-97; figure 1 *<br><br>--- | 1 | |
| A | CH - A - 377 562 (J. STONE & CO.)<br><br>* page 2, lines 50-109; figures *<br><br>--- | 1 | |
| A | DE - A - 2 638 231 (HELLIGE)<br><br>* page 4, lines 20-28; figure 1 *<br><br>--- | 1,2 | **CATEGORY OF CITED DOCUMENTS** |
| A | DE - A - 1 909 627 (LICENTIA-PA-TENT)<br><br>* page 3, lines 5-29; figures *<br><br>--- | 1,2 | X: particularly relevant if taken alone<br>Y: particularly relevant if combined with another document of the same category<br>A: technological background<br>O: non-written disclosure<br>P: intermediate document<br>T: theory or principle underlying the invention<br>E: earlier patent document, but published on, or after the filing date<br>D: document cited in the application<br>L: document cited for other reasons |
| A | FR - A - 2 302 365 (RUTI-TE-STRAKE)<br><br>* page 2, lines 15-39; figures * | 1,2,3<br>./. | &: member of the same patent family, corresponding document |

| X | The present search report has been drawn up for all claims | |
|---|---|---|
| Place of search<br>The Hague | Date of completion of the search<br>23-03-1982 | Examiner<br>HOUILLON |

European Patent Office

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| | & GB - A - 1 526 968 --- | |
| A | DE - A - 2 515 147 (VEB KOMBINAT) <br> * page 6, line 1 - page 7, line 14; figures 1,2 * <br> ---------- | 5,6 |

CLASSIFICATION OF THE APPLICATION (Int. Cl.³)

TECHNICAL FIELDS SEARCHED (Int. Cl.³)

EPO Form 1503.2   06.78